# FASCICULE DE BREVET EUROPEEN

(11) **EP 0 764 794 B1**
(45) Date de publication et mention de la délivrance du brevet: **26.07.2000**
(21) Numéro de dépôt: 96401951.7
(22) Date de dépôt: 12.09.1996
(51) Int. Cl.: F16F 3/02, F16F 7/14

(54) **Dispositif antivibrations/antichocs du genre comportant un élément porteur et un élément porté unis par des segments de câble et des lames stabilisatrices**
Schwingungs- und stossdämpfende Einrichtung mit lagerndem Element und gelagertes Element, vereinigt mit Kabelabschnitten und stabilisierenden Blättern
Vibration and shock damping device comprising a carrier element and a carried element, connected by cable segments and stabilising leaf springs

(30) Priorité: 20.09.1995 FR 9511056
(43) Date de publication de la demande: 26.03.1997
(73) Titulaire: SOCITEC SOCIETE POUR LE COMMERCE INTERNATIONAL ET LES ECHANGES TECHNIQUES, F-78500 Sartrouville (FR)
(72) Inventeur: Le Derf, Eric, 92150 Suresnes (FR)
(74) Mandataire: Rinuy, Santarelli

(56) Documents cités:
- EP-A- 0 263 970
- EP-A- 0 358 146
- EP-A- 0 612 932
- DE-A- 1 750 751
- FR-A- 2 359 324
- FR-A- 2 695 696
- PATENT ABSTRACTS OF JAPAN vol. 012, no. 109 (M-682), 8 Avril 1988 & JP-A-62 237135 (MITSUBISHI ELECTRIC CORP), 17 Octobre 1987,

## Description

La présente invention a trait, d'une manière générale, aux dispositifs antivibrations/antichocs. Plus précisément, elle concerne les dispositifs du genre comportant un élément porteur et un élément porté liés par un moyen amortisseur.

De tels dispositifs amortisseurs sont notamment utilisés pour la suspension de moteurs électriques ou à combustion interne ou encore de compresseurs à air ou autres, mais aussi pour la protection d'équipements fragiles ou sensibles contre les chocs ou les vibrations.

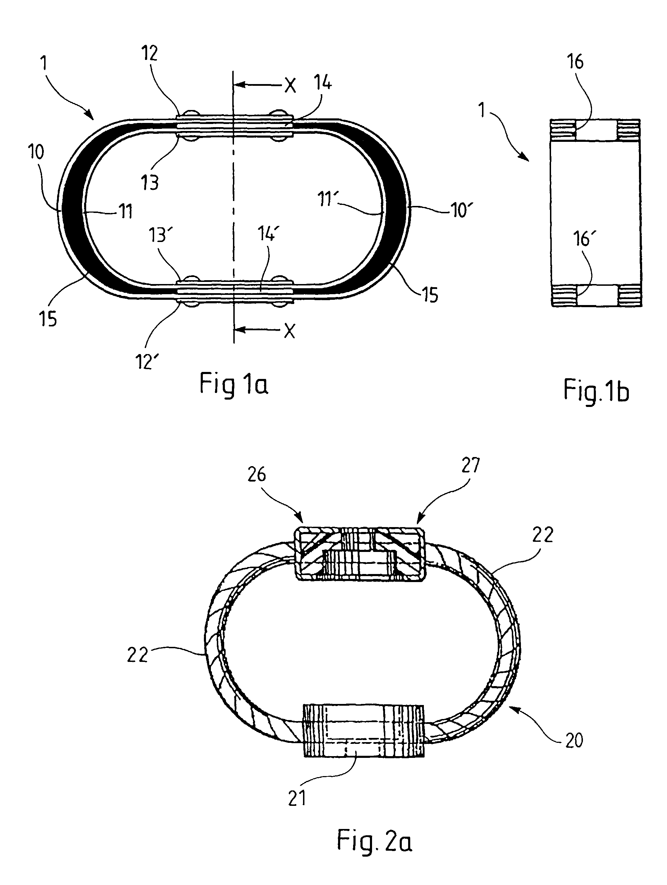

Un amortisseur connu de ce type est représenté sur les figures 1a et 1b qui en sont, respectivement, une vue en élévation et une vue en coupe transversale suivant la ligne X-X de la figure 1a. Il est constitué d'un ensemble de quatre lames en acier inoxydable et sensiblement en forme de U, reçues deux à deux l'une dans l'autre, les lames interne et externe de chaque jeu de deux lames 10, 10', 11, 11' étant respectivement fixées aux lames correspondantes de l'autre jeu de deux, par leurs extrémités et par rivetage, pour former un dispositif amortisseur 1 de forme approximativement elliptique. En l'espèce, la fixation met également en oeuvre des plaques d'attache 12, 13 et 12', 13', respectivement, couvrant les plans de joint des lames, et des plaques d'espacement 14 et 14', respectivement, interposées entre les lames externes 10, 10' et internes 11, 11' respectives.

Les espaces entre les lames externes 10, 10' et internes 11, 11' respectives sont remplis avec un composé amortisseur 15 à base de résine époxy.

Par ailleurs, les alésages 16 et 16' pratiqués dans les lames et plaques respectives permettent la fixation de l'objet à porter et celle du dispositif amortisseur 1 sur une embase.

La demanderesse a pu constater qu'un tel dispositif amortisseur présente un certain nombre d'inconvénients.

Tout d'abord, la résine époxy présente une très mauvaise tenue en température : vers 0°C elle est pratiquement rigide, tandis que vers 30°C elle est d'une consistance plutôt molle.

Il en résulte que la fréquence de résonance du dispositif amortisseur devient hautement dépendante de la température, ce qui est rédhibitoire pour un tel dispositif, puisque l'on cherche à caler celui-ci d'origine à une fréquence de résonance donnée pour une masse portée donnée.

En outre, les composés à base de résines époxy vieillissent mal et leur durée de vie est relativement limitée. Il est donc nécessaire de remplacer fréquemment les dispositifs amortisseurs incorporant de tels composés.

Par ailleurs, la fabrication d'un tel dispositif est relativement complexe et, par voie de conséquence, relativement onéreuse.

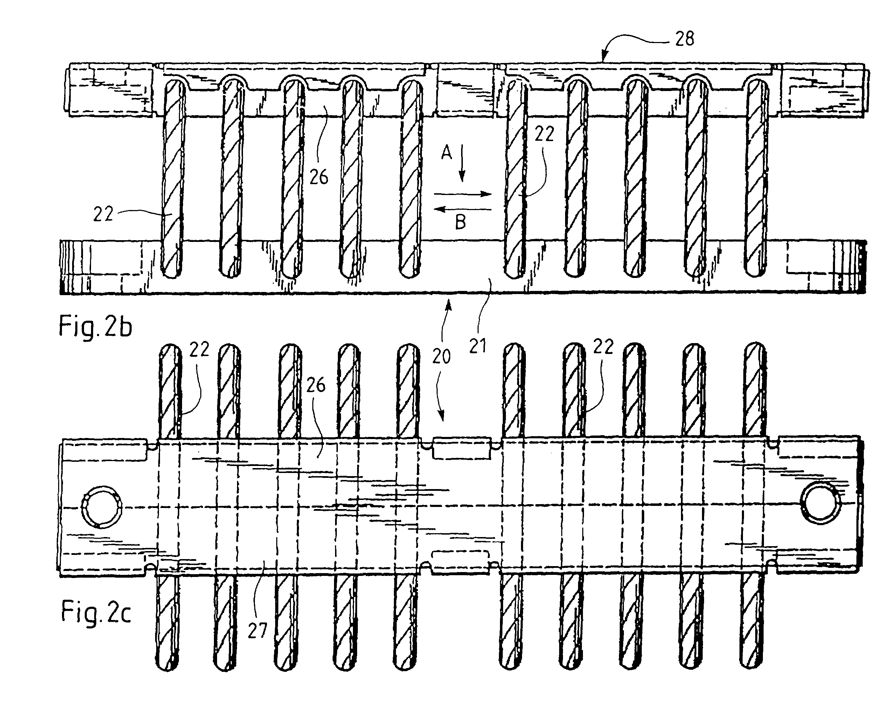

La demanderesse a pensé à remplacer ce type de dispositif amortisseur par un autre type connu et illustré sur les figures 2a à 2c qui sont respectivement des vues en section partielle, en élévation et en plan de ce dispositif. Ce dispositif 20 comporte une barre 21 dans laquelle une zone médiane de plusieurs brins de câble 22 sont ancrés, tandis que les extrémités libres de ces bras 22 sont chacune ancrée dans un élément allongé 26, 27. Les éléments allongés 26 et 27 sont retenus côte à côte, dans un plan parallèle à celui de la barre 21, par l'intermédiaire d'un moyen de retenue 28, les brins de câble 22 définissant ainsi, de part et d'autre de la barre 21 et des éléments 26 et 27, des segments de câble courbes 22, parallèles les uns aux autres.

Malheureusement, ce type de dispositif amortisseur présente également certaines limites.

En effet, lorsqu'une charge en compression est appliquée à ce dispositif amortisseur, celui-ci s'avère instable horizontalement : au lieu de se déplacer uniquement dans une direction verticale (sens de la flèche A), il se déplace également horizontalement (sens de la flèche B).

La présente invention vise à pallier ces inconvénients.

Elle propose pour ce faire un dispositif antivibrations/antichocs du genre comportant un élément porteur et un élément porté disposés face à face et unis par une pluralité de segments de câble disposés de part et d'autre des éléments porteur et porté, chacun de ces segments de câble étant fixé à l'élément porteur et à l'élément porté et s'étendant entre lesdits éléments porteur et porté suivant un chemin de câble au moins partiellement courbe, dispositif caractérisé en ce que lesdits éléments porteur et porté sont en outre unis par deux lames stabilisatrices opposées, également fixées par leurs extrémités aux dits éléments porteur et porté, et situées de part et d'autre de ces éléments porteur et porté, lesdites lames stabilisatrices présentant un profil correspondant sensiblement à celui du chemin de câble desdits segments de câble.

Grâce à ces dispositions, la présente invention pallie les inconvénients susvisés.

En effet, la combinaison des lames et des segments de câble assure la stabilité du dispositif amortisseur dans le plan horizontal, tout en permettant de conférer à ce dispositif des caractéristiques d'amortissement identiques à ceux de l'état de la technique.

En outre, les lames stabilisatrices présentent une certaine raideur, le diamètre des segments de câble pourra être choisi inférieur à celui des brins de câble de l'état de la technique, facilitant l'assemblage du dispositif amortisseur, tout en restant aux dimensions des dispositifs amortisseurs de l'état de la technique.

De manière avantageuse, l'un au moins des éléments porteur et porté est un élément modulaire comportant, d'une part, des modules d'ancrage individuels des segments de câble et, d'autre part, des moyens d'assemblage de ceux-ci.

Grâce à ces dispositions, la fabrication du dispositif est facilitée. En effet, l'ancrage des segments de câble sur les éléments porteur et porté peut se faire à plat, avant de venir assembler les modules d'ancrage individuels à l'aide des moyens d'assemblage.

De plus, démonté, le dispositif occupe un volume peu important, facilitant son transport et son stockage.

Afin de faciliter davantage encore l'assemblage, lesdits moyens d'assemblage font également office de moyens de fixation des lames sur les éléments porteur et porté.

Les caractéristiques et avantages de la présente invention ressortiront d'ailleurs de la description qui va suivre en référence aux dessins annexés sur lesquels :
- les figures 1a, 1b, 2a à 2c ont déjà été décrites ;
- la figure 3 est une vue en perspective d'un premier mode de réalisation d'un dispositif conforme à l'invention ;
- la figure 4 est une vue en perspective d'un second mode de réalisation préféré d'un dispositif conforme à l'invention ;
- la figure 5 est une vue en perspective d'un troisième mode de réalisation d'un dispositif conforme à l'invention ; et
- la figure 6 est une vue en perspective d'un quatrième mode de réalisation d'un dispositif conforme à l'invention.

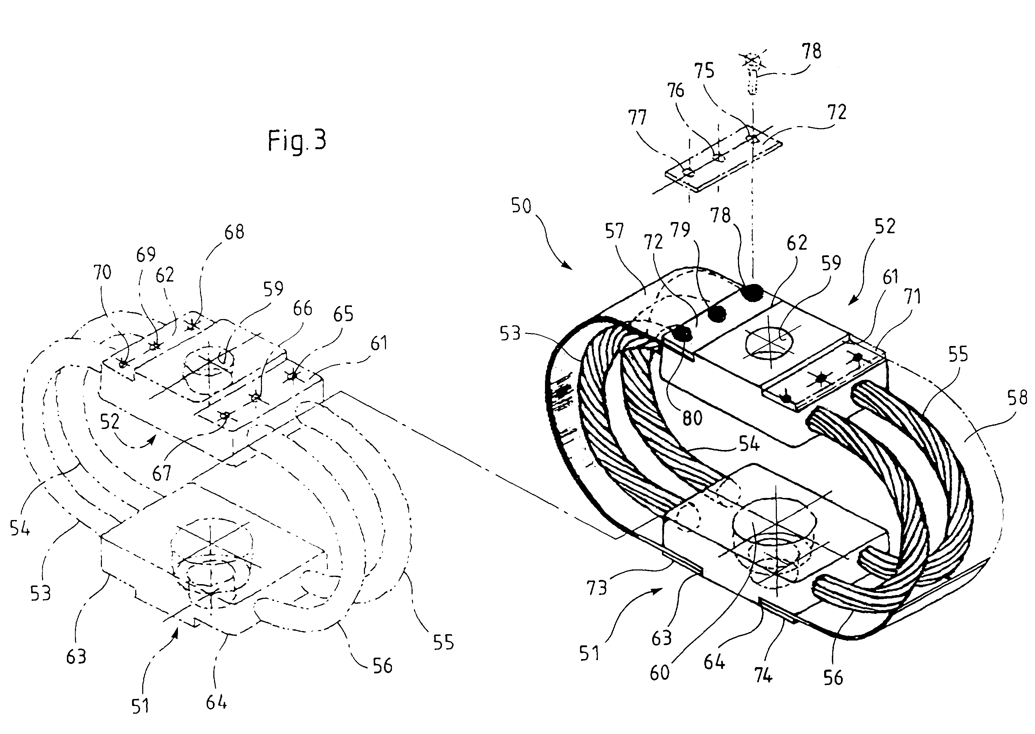

Préalablement à la description, notamment à l'appui de la figure 3, d'un premier mode de réalisation d'un dispositif antivibrations/antichocs conforme à l'invention, il y a lieu d'observer, que sur les figures 3 à 6, certaines parties du dispositif conforme à l'invention ont été représentées en traits interrompus, afin de schématiser l'état non assemblé des dispositifs correspondants.

On notera également que sur les figures 3 à 6, des éléments identiques ou similaires portent les mêmes références numériques.

Selon un premier mode de réalisation choisi et représenté sur la figure 3, un dispositif antivibrations/antichocs 50 comporte un élément porteur 51 et un élément porté 52 unis par quatre segments de câble 53, 54, 55, 56 et deux lames stabilisatrices 57, 58 en forme de U, formant moyens amortisseurs.

Le dispositif est ici destiné à porter un mécanisme générant des vibrations, ce mécanisme étant fixé sur l'élément porté 52 par une vis (non représentée) adaptée à traverser l'alésage 59 pratiqué dans l'élément porté 52, tandis qu'un autre alésage 60 pratiqué dans l'élément porteur 51 permet la fixation du dispositif 50 à une embase de support.

Plus particulièrement, les éléments porteur 51 et porté 52 sont des blocs ayant sensiblement la forme de parallélépipèdes rectangles et sont réalisés en alliage léger moulé, tel que l'aluminium. Les extrémités des segments de câble individuels 53, 54, 55, 56 ont été ancrées par le moulage dans les éléments porteur 51 et porté 52. En l'espèce, une des extrémités de chaque segment a été ancrée dans l'élément porteur 51, tandis que l'autre a été ancrée dans l'élément porté 52, en sorte d'avoir, de part et d'autre des éléments porteur 51 et porté 52, deux segments de câble parallèles l'un à l'autre et ayant sensiblement une forme en U. En outre, ces segments de câble 53, 54, 55, 56 sont ici disposés symétriquement par rapport à un plan médian transversal du dispositif 50.

Les lames stabilisatrices 57, 58 sont réalisées en acier inoxydable et présentent un profil en U leur permettant d'entourer, à distance, la forme en U prise par le chemin de câble des segments de câble 53, 54, 55, 56 correspondants.

Ces lames 57, 58 sont, par ailleurs, fixées par vissage sur les éléments porteur 51 et porté 52. En l'espèce, l'élément porté 52 est pourvu de deux décrochements latéraux 61, 62, sur son côté tourné vers l'extérieur, de part et d'autre de l'alésage 59, chacun de ces décrochements 61, 62 comportant trois taraudages, repérés respectivement 65, 66, 67 et 68, 69, 70. L'élément porteur 51 est, lui aussi, pourvu de décrochements latéraux 63, 64 et de taraudages similaires à ceux de l'élément porté 52. Chaque extrémité du profil en U de chaque lame 57, 58 est calée dans un décrochement latéral 61, 62, 63, 64 correspondant et comporte trois trous communiquant respectivement avec les taraudages correspondants pratiqués dans les décrochements latéraux 61, 62, 63, 64. Des platines 71, 72, 73, 74 sont superposées aux extrémités des lames 57, 58 calées dans les décrochements latéraux 61, 62, 63, 64, de manière que leurs surfaces tournées vers l'extérieur viennent à fleur avec la surface tournée vers l'extérieur de l'élément porteur 51 ou porté 52. Ces platines sont également perforées de trous de passage 75, 76, 77, venant communiquer avec les trous et taraudages correspondants des lames et des éléments porteur et porté. Enfin, des vis, dont trois seulement ont été représentées sur la figure 3 et portent les références numériques 78, 79, 80, sont vissées dans les taraudages des différents décrochements latéraux 61, 62, 63, 64, en passant à travers les trous correspondants des extrémités des lames 57, 58 et des platines 71, 72, 73, 74, permettant de fixer les lames 57, 58 aux éléments porteur 51 et porté 52.

Ainsi fixées, ces lames 57, 58 sont disposées face à face, de part et d'autre des éléments porteur 51 et porté 52, en sorte de définir une forme de dispositif antivibrations/antichocs 50 approximativement elliptique.

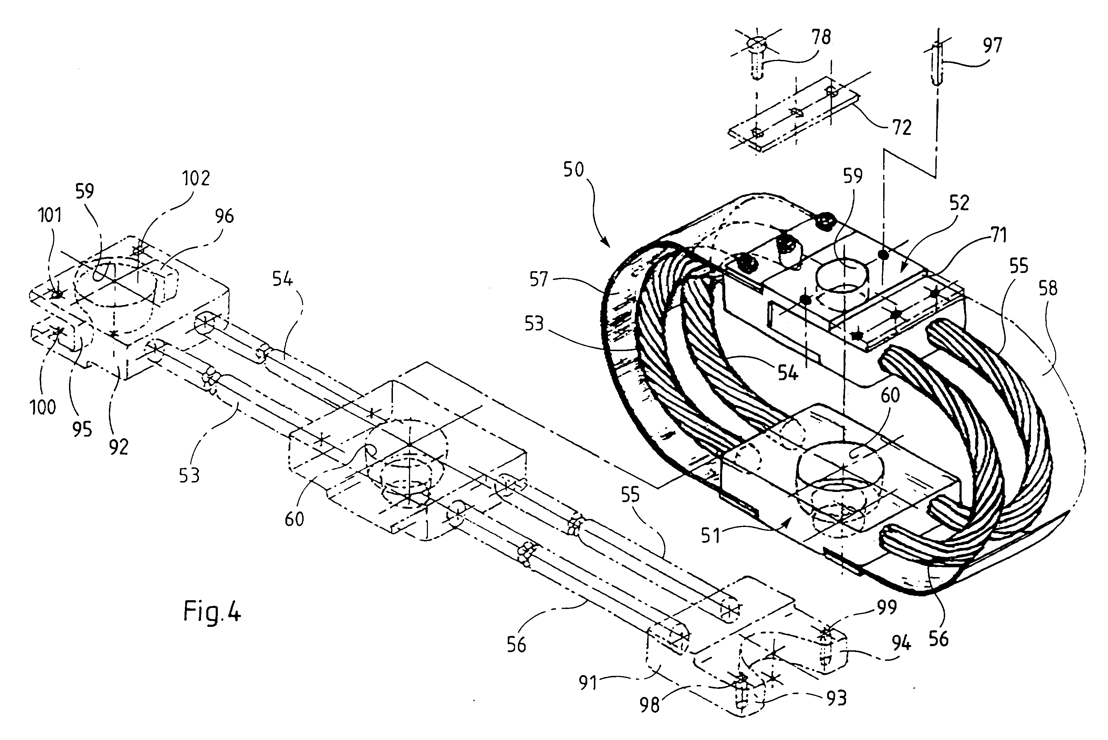

Sur la figure 4 est représenté un mode de réalisation préféré du dispositif antivibrations/antichocs 50. Ce dernier est en tous points identique au dispositif antivibrations/antichocs 50 de la figure 3, mis à part l'élément porté 52 qui est, ici, un élément modulaire. Il ne sera donc décrit ci-après que les caractéristiques relatives à cet élément modulaire 52.

Cet élément modulaire 52 comporte, tout d'abord, deux modules d'ancrage individuels 91, 92 des extrémités des segments de câble 53, 54, 55, 56. Ces modules 91, 92 sont également réalisés par moulage.

Plus précisément, l'un des modules d'ancrage 91, 92 est un élément mâle 91 destiné à être enfiché dans l'autre module d'ancrage 92 constituant un élément femelle. L'élément mâle 91 comporte à cet effet deux doigts 93, 94 qui, à l'état assemblé de l'élément modulaire 52 s'engage dans deux évidements complémentaires 95, 96 pratiqués dans l'élément femelle 92.

L'élément modulaire comporte, d'autre part, des moyens d'assemblage des modules d'ancrage individuels 91, 92. En l'espèce, ces moyens d'assemblage sont constitués par deux goupilles, dont une seule a été représentée sur la figure 4 et porte la référence numérique 97. Pour recevoir ces goupilles 97 par emmanchement à force, les doigts 93 et 94 de l'élément mâle 91 sont chacun pourvus d'un alésage 98, 99 communiquant, à l'état assemblé des éléments mâle 91 et femelle 92, à ses deux extrémités avec des trous de réception pratiqués de part et d'autre des évidements 95, 96 dans l'élément femelle 92, seuls trois de ces trous de réception étant visibles sur la figure 4 et portant les références numériques 100, 101, 102.

On observera encore que, les doigts 93 et 94 sont conformés de telle sorte à entourer, à l'état assemblé des éléments mâle 91 et femelle 92, l'alésage 59 décrit plus en détail à l'appui de la figure 3 et que le décrochement latéral 71 est, ici, réalisé, à l'état assemblé des éléments mâle 91 et femelle 92, par un chevauchement de la partie de l'élément femelle 92 tournée vers l'extérieur, au-dessus de l'élément mâle 91.

Grâce à ces dispositions, le moulage des éléments porteur 51 et porté 52 ainsi que l'ancrage des extrémités des segments de câble 53, 54, 55, 56, sur ces éléments, peut être réalisé à plat, avant que l'on vienne assembler l'élément modulaire, puis fixer les lames stabilisatrices en forme de U 57, 58. La fabrication de ce dispositif antivibrations/antichocs 50 est ainsi quelque peu plus aisée que dans le cas de celui du premier mode de réalisation décrit à l'appui de la figure 3, où il est nécessaire de disposer des entretoises entre les moules des éléments porteur 51 et porté 52.

Les caractéristiques du dispositif antivibrations/antichocs décrit à l'appui de cette figure 4 sont les suivantes :
- câble multitorons de 13 mm de diamètre,
- longueur des éléments porteur 51 et porté 52 : 70 mm,
- largeur des éléments porteur 51 et porté 52 : 51 mm,
- hauteur des éléments porteur 51 et porté 52 : 18 mm,
- hauteur du dispositif mesuré au niveau de la fibre moyenne : 92 mm,
- largeur du dispositif mesuré au niveau de la fibre moyenne : 189 mm,
- hauteur totale du dispositif : 113,2 mm,
- lame en acier de 1, 6 mm d'épaisseur et ayant un rayon de courbure intérieur de 55 mm,
- charge statique Cₛ : 70 daN,
- fréquence de résonance verticale Fᵥ : 8 Hz,
- raideur verticale Kᵥ : 180.000 N/m,
- raideur en roulis Kᵣ : 80.000 N/m,
- raideur en cisaillement K_{c} : 160.000 N/m,

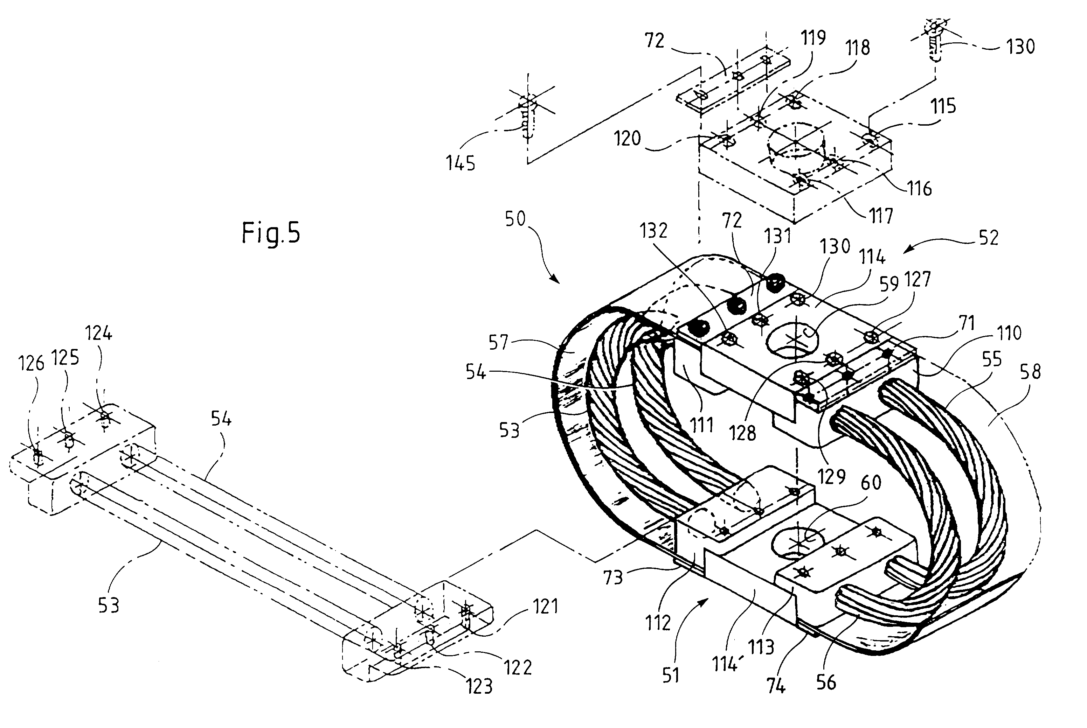

Dans le cas du mode de réalisation de la figure 5, les éléments porteur 51 et porté 52 sont maintenant tous deux des éléments modulaires.

Ici, ces éléments modulaires 51, 52 comportent, d'une part, des modules d'ancrage individuels 110, 111, 112, 113 présentant en section une forme en L. Les éléments modulaires 51, 52 comportent, d'autre part, des moyens d'assemblage des modules d'ancrage individuels 110, 111, 112, 113 les uns aux autres, constitués en l'espèce de plaques d'attache 114, 114' dans lesquelles sont respectivement pratiqués les alésages 59 et 60, mais également des alésages de passage de vis, au nombre de trois de chaque côté des trous 59 et 60. Ces alésages, référencés 115, 116, 117, 118, 119 et 120 pour la plaque 114, communiquent chacun avec un taraudage pratiqué dans l'une des branches du L d'un module d'ancrage 110, 111, 112, 113 correspondant lorsque, à l'état assemblé de l'élément modulaire porté 52 ou porteur 51, la plaque d'attache 114, 115 est disposée, du côté de ses alésages de passage des vis 115, 116, 117, 118, 119, 120 dans les angles des branches des L respectifs. Ceux des taraudages de ce type, visibles sur la figure 5, sont pratiqués dans les modules d'ancrage 111 et 112 et portent les références numériques 121, 122, 123, 124, 125 et 126. Des vis 127, 128, 129, 130, 131, 132 passant au travers des alésages 115, 116, 117, 118, 119, 120 permettent, par vissage dans les taraudages 121, 122, 123, 124, 125, 126, de réaliser l'assemblage des modules d'ancrage individuels 110 et 111 et de manière similaire, des modules d'ancrage 112 et 113.

Les lames stabilisatrices 57, 58 sont, quant à elles, fixées par vissage, similairement au mode de réalisation précédent, sur les secondes branches des L formées par les modules d'ancrage individuels 110, 111, 112, 113 : une seule des vis utilisées à cet effet est référencée sur la figure 5 et porte la référence numérique 145. Des platines 71, 72, 73, 74 sont ici également mises en oeuvre, les décrochements latéraux étant réalisés grâce à l'épaisseur des plaques d'attache 114, 114'.

Grâce à ces dispositions, et comme montré en traits interrompus sur la figure 5, il est ainsi possible de réaliser plusieurs sous-unités individuelles de modules d'ancrage sur lesquels sont ancrés des segments de câble.

Les moyens d'ancrage individuels 110, 111, 112, 113 ainsi que les plaques d'attache 114, 114' sont ici également réalisés par moulage.

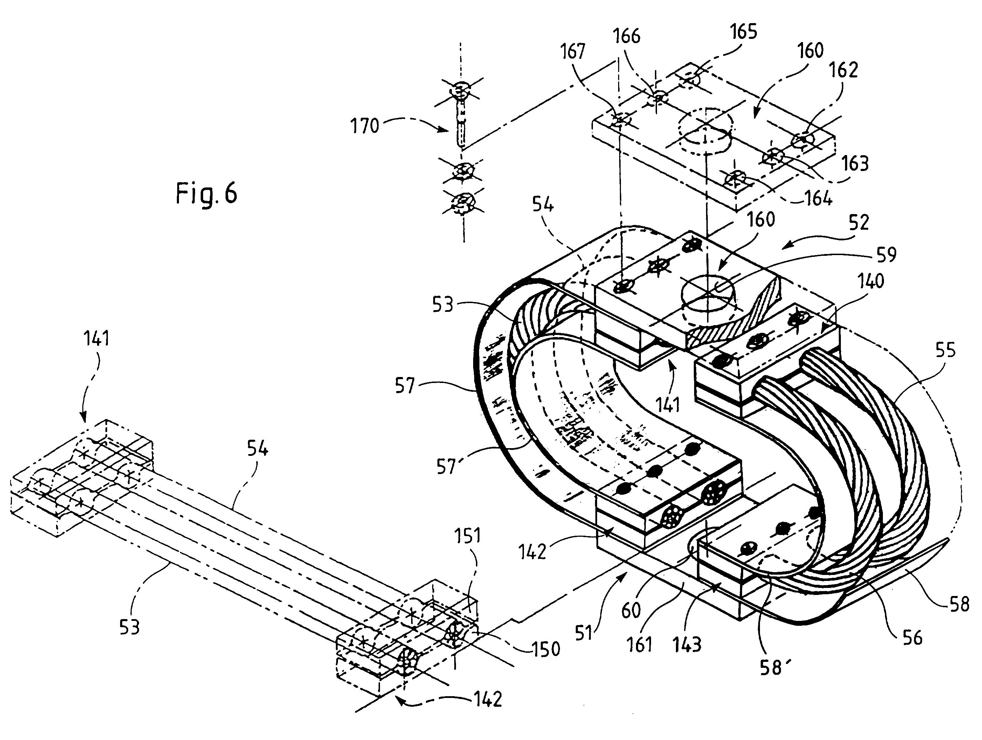

Dans le cas du mode de réalisation de la figure 6, les éléments porteur 51 et porté 52 sont à nouveau réalisés sous forme modulaire, mais non pas par moulage.

En outre, il est ici mis en oeuvre, de part et d'autre des éléments porteur 51 et porté 52, deux lames stabilisatrices 57, 57' et 58, 58', respectivement, reçues l'une dans l'autre, en encadrant les segments de câble correspondant 53, 54, 55, 56. Ces segments présentent, comme pour les modes de réalisation précédents, un chemin de câble au moins partiellement courbe, ici en forme de U.

Chacun des modules d'ancrage 140, 141, 142, 143 est constitué de deux barrettes, dont seules celles du module 142 ont été référencées sur la figure 6 et portent les références 150, 151, entre lesquelles sont serrées les extrémités des segments de câble 53, 54, 55, 56 correspondantes. A cet effet, ces barrettes 150, 151 sont, chacune, pourvues de rainures sensiblement semi-circulaires de réception des extrémités de segments de câble 53, 54, 55, 56 correspondantes. Les barrettes des autres modules d'ancrage 140, 141 et 143 sont bien sûr de structure identique à celles référencées 150 et 151.

La fixation d'une barrette à l'autre ainsi que des modules d'ancrage 140, 141, 142, 143 les uns aux autres, est réalisée grâce à des plaques d'attache 160, 161 pourvues, de part et d'autre des alésages 59 et 60, de trois alésages de passage de boulons : seuls les alésages de passage de la plaque 160 ont été référencés et portent respectivement les références numériques 162, 163, 164 et 165, 166, 167 et un seul des boulons a été illustré sur la figure 6 et porte la référence numérique d'ensemble 170.

Les différents boulons passent également à travers des trous et alésages (non référencés sur la figure 6) pratiqués dans les lames stabilisatrices 57, 57', 58, 58' ainsi que dans les barrettes 150, 151, permettant ainsi, non seulement d'assembler les barrettes les unes aux autres, les modules d'ancrage individuels 140, 141, 142, 143 les uns aux autres, mais également de fixer les lames stabilisatrices 57, 57', 58, 58' aux éléments modulaires porteur 51 et porté 52. En l'espèce, les lames stabilisatrices internes 57', 58' sont fixées sur la surface interne des barrettes correspondantes des modules d'ancrage 140, 141, 142, 143, tandis que les lames stabilisatrices externes 57, 58 sont insérées entre les modules d'ancrage 140, 141, 142, 143 et les plaques d'attache 160, 161.

L'ensemble des dispositifs antivibrations/antichocs qui viennent d'être décrits pallie bien sûr les inconvénients de l'état de la technique susmentionné et présente les avantages également mentionnés ci-dessus, amortissant notamment parfaitement les chocs et vibrations tout en restant stable. En outre, l'amortissement de tels chocs et vibrations a lieu, avec les dispositifs de la présente invention, sur une distance verticale moins importante que pour les dispositifs amortisseurs de l'état de la technique, tels que ceux décrits à l'appui des figures 2a et 2b.

Bien entendu, la présente invention ne se limite nullement aux modes de réalisation choisis et représentés. Elle englobe toute variante à la portée de l'homme de l'art.

En particulier, ce dernier est libre de prévoir de part et d'autre des éléments porteur 51 et porté 52, plus de deux segments de câble parallèles,ou encore un segment de câble unique par côté.

L'homme de l'art saura également mettre en oeuvre tout autre type de moulage des éléments porteur et porté et plus particulièrement un moulage de matière plastique.

En outre, l'homme de l'art pourra prévoir de disposer côte à côte ou même superposées plusieurs lames stabilisatrices, telles que celles repérées 57, 58 d'une part, et 57', 58' d'autre part, sur les figures 3 à 6.

Les extrémités des segments de câble 53, 54, 55, 56 pourront également être fixées sur les éléments porteur 51 et porté 52 par d'autres moyens connus de l'homme de l'art, tels que le sertissage, le collage, ...

Dans le cas du mode réalisation de la figure 3, au lieu de mettre en oeuvre des segments de câble constitués par des brins de câble individuels, de part et d'autre des éléments porteur 51 et porté 52, l'homme de l'art saura mettre en oeuvre des segments de câble faisant partie deux à deux d'un même brin de câble, une portion du brin de câble étant ancrée dans l'élément porteur 51 non modulaire et les extrémités libres de ce brin de câble étant respectivement ancrées sur les modules d'ancrage individuels de l'élément porté modulaire 52.

Les lames stabilisatrices en acier pourront également être remplacées par des lames stabilisatrices en matériau composite.

Enfin, ces lames stabilisatrices 57, 58, au lieu d'être placées à l'extérieur des segments de câble comme cela est le cas dans les modes de réalisation décrits à l'appui des figures 3 à 5, pourront être placées à l'intérieur uniquement des segments de câble, similairement à la disposition des lames stabilisatrices 57', 58' du mode de réalisation décrit à l'appui de la figure 6.

## Revendications

1. Dispositif antivibrations/antichocs du genre comportant un élément porteur (51) et un élément porté (52) disposés face à face et unis par une pluralité de segments de câble (53-56) disposés de part et d'autre des éléments porteur et porté, chacun de ces segments de câble étant fixé à l'élément porteur et à l'élément porté et s'étendant entre lesdits éléments porteur et porté suivant un chemin de câble au moins partiellement courbe, dispositif caractérisé en ce que lesdits éléments porteur et porté sont en outre unis par au moins deux lames stabilisatrices opposées (57, 58), également fixées par leurs extrémités auxdits éléments porteur et porté, et situées de part et d'autre de ces éléments porteur et porté, lesdites lames stabilisatrices (57, 58) présentant un profil correspondant sensiblement à celui du chemin de câble desdits segments de câble.

2. Dispositif selon la revendication 1, caractérisé en ce que l'un au moins des éléments porteur (51) et porté (52) est un élément modulaire comportant, d'une part, des modules d'ancrage individuels des segments de câble, et, d'autre part, des moyens d'assemblage de ceux-ci.

3. Dispositif selon la revendication 2, caractérisé en ce que lesdits moyens d'assemblage font également office de moyens de fixation desdites lames (57, 58) sur lesdits éléments porteur et porté.

4. Dispositif selon l'une quelconque des revendications 1 à 3, caractérisé en ce que lesdites lames et lesdits chemins de câble ont sensiblement une forme en U.

5. Dispositif selon l'une quelconque des revendications 1 à 4, caractérisé en ce que lesdits segments de câble sont, de part et d'autre desdits éléments porteur et porté, au nombre de deux et parallèles l'un à l'autre.

6. Dispositif selon l'une quelconque des revendications 2 à 5, caractérisé en ce que l'un desdits éléments porteur et porté est un élément modulaire et en ce que les segments de câble disposés de part et d'autre desdits éléments porteur et porté font partie deux à deux d'un même brin de câble, les extrémités libres de ce brin de câble étant ancrées sur lesdits modules d'ancrage individuels.

7. Dispositif selon l'une quelconque des revendications 1 à 5, caractérisé en ce que lesdits segments de câble sont constitués par des brins de câble individuels.

8. Dispositif selon l'une quelconque des revendications 1 à 7, caractérisé en ce qu'il comporte un jeu de deux lames stabilisatrices (57, 57', 58, 58') en forme de U de part et d'autre des éléments porteur et porté, les deux lames étant respectivement reçues l'une dans l'autre, en encadrant lesdits segments de câbles correspondants qui présentent un chemin de câble également en forme de U.

9. Dispositif selon l'une quelconque des revendications 1 à 8, caractérisé en ce que lesdits éléments porteur et porté sont formés par moulage, lesdits segments de câble étant ancrés dans ces derniers.

## Claims

1. An antivibration/antishock device of the kind including a support member (51) and a supported member (52) disposed face to face and joined by a plurality of cable segments disposed on opposite sides of the support and supported members, each of said cable segments being fixed to the support member and to the supported member and extending between said support and supported members in an at least partly curved cable path, which device is characterized in that said support and supported members are also joined by at least two opposite stabilizer blades (57, 58) also fixed at their ends to said support and supported members and situated on either side of said support and supported members, said stabilizer blades (57, 58) having a profile substantially corresponding to that of the cable path of said cable segments.

2. The device claimed in claim 1, characterized in that at least one of the support and supported members (51) and (52) is a modular member including individual cable segment anchor modules and means for assembling them together.

3. The device claimed in claim 2, characterized in that said assembly means also constitute means for fixing said blades (57, 58) to said support and supported members.

4. The device claimed in any one of claims 1 to 3, characterized in that said blades and said cable paths are substantially U-shaped.

5. The device claimed in any one of claims 1 to 4, characterized in that there are two parallel cable segments on each side of said support and supported members.

6. The device claimed in any one of claims 2 to 5, characterized in that one of said support and supported members is a modular member and in that the pairs of cable segments on opposite sides of said support and supported members are parts of the same run of cable, the free ends of said cable run being anchored to said individual anchor modules.

7. The device claimed in any one of claims 1 to 5, characterized in that said cable segments are individual runs of cable.

8. The device claimed in any one of claims 1 to 7, characterized in that it includes a pair of U-shape stabilizer blades (57, 57', 58, 58') on each side of the support and supported members, the two blades being respectively received one within the other, and surrounding said corresponding cable segments which also have a U-shape cable path.

9. The device claimed in any one of claims 1 to 8, characterized in that said support and supported members are cast or molded and said cable segments are anchored in them.

## Patentansprüche

1. Schwingungs- und stossdämpfende Einrichtung mit lagerndem Element (51) und gelagertem Element (52), welche einander gegenüberliegend angeordnet und durch eine Vielzahl von Seilabschnitten (53-56) vereinigt sind, welche beiderseits des lagernden Elements und des gelagerten Elements angeordnet sind, wobei jeder dieser Seilabschnitte am lagernden Element und am gelagerten Element befestigt ist und sich zwischen dem lagernden und dem gelagerten Element gemäß einem Seilverlauf erstreckt, der zumindest teilweise gekrümmt ist, dadurch gekennzeichnet, dass das lagernde und das gelagerte Element außerdem durch mindestens zwei gegenüberliegende stabilisierende Blätter (57,58) vereinigt sind, welche ebenfalls an ihren Enden am lagernden Element und am gelagerten Element befestigt sind und welche beiderseits des lagernden Elements des gelagerten Elements gelegen sind, wobei die stabilisierenden Blätter (57,58) ein Profil aufweisen, das im wesentlichen demjenigen dem Seilverlauf der Seilabschnitte entspricht.

2. Vorrichtung nach Anspruch 1, dadurch gekennzeichnet, dass mindestens eines des lagernden Elements (51) und des gelagerten Elements (52) ein Modulelement ist, das einerseits individuelle Verankerungsmodule der Seilabschnitte und andererseits Mittel zum Zusammenbau derselben aufweist.

3. Vorrichtung nach Anspruch 2, dadurch gekennzeichnet, dass die Mittel zum Zusammenbau auch die Aufgabe von Mitteln zur Befestigung der Blätter (57,58) auf dem lagernden und dem gelagerten Element erfüllen.

4. Vorrichtung nach einem der Ansprüche 1 bis 3, dadurch gekennzeichnet, dass die Blätter und die Seilverläufe im wesentlichen die Form eines U aufweisen.

5. Vorrichtung nach einem der Ansprüche 1 bis 4, dadurch gekennzeichnet, dass zwei Seilabschnitte, die zueinander parallel sind, beiderseits des lagernden Elements und des gelagerten Elements vorhanden sind.

6. Vorrichtung nach einem der Ansprüche 2 bis 5, dadurch gekennzeichnet, dass eines des lagernden Elements und des gelagerten Elements ein Modulelement ist und dass die beiderseits des lagernden Elements und des gelagerten Elements angeordneten Seilabschnitte paarweise Teil desselben Seilstranges sind, wobei die freien Enden dieses Seilstranges auf den individuellen Verankerungsmodulen verankert sind.

7. Vorrichtung nach einem der Ansprüche 1 bis 5, dadurch gekennzeichnet, dass die Seilabschnitte von individuellen Seilsträngen gebildet sind.

8. Vorrichtung nach einem der Ansprüche 1 bis 7, dadurch gekennzeichnet, dass sie ein Spiel aus zwei stabilisierenden Blättern (57,57',58,58') in Form eines U beiderseits lagernden Elements und des gelagerten Elements aufweist, wobei die beiden Blätter jeweils ineinander aufgenommen sind, wobei sie die entsprechenden Seilabschnitte, die einen ebenfalls U-förmigen Seilverlauf aufweisen, umrahmen.

9. Vorrichtung nach einem der Ansprüche 1 bis 8, dadurch gekennzeichnet, dass das lagernde Element und das gelagerte Element durch Guss hergestellt sind, wobei die Seilabschnitte in diesen letzteren verankert sind.
